# EUROPÄISCHE PATENTSCHRIFT

(11) **EP 1 272 380 B1**
(45) Veröffentlichungstag und Bekanntmachung des Hinweises auf die Patenterteilung: **07.12.2005**
(21) Anmeldenummer: 01929391.9
(22) Anmeldetag: 02.03.2001
(51) Int. Cl.: B60T 8/00, G05B 9/03

(54) **ANORDNUNG UND VORRICHTUNG ZUR ERFASSUNG VON GIERBEWEGUNGEN MITTELS REDUNDANTER MESSKANÄLE**
SYSTEM AND DEVICE FOR DETECTING YAWING MOVEMENTS USING REDUNDANT MEASURING CHANNELS
SYSTEME ET DISPOSITIF POUR LA DETECTION DE MOUVEMENTS D'EMBARDEE AU MOYEN DE VOIES DE MESURE REDONDANTES

(30) Priorität: 09.03.2000 DE 10011116; 18.08.2000 DE 10040511
(43) Veröffentlichungstag der Anmeldung: 08.01.2003
(73) Patentinhaber: Continental Teves AG & Co. oHG, 60488 Frankfurt (DE)
(72) Erfinder: BURGHARDT, Roland, 60439 Frankfurt (DE); LOHBERG, Peter, 61381 Friedrichsdorf (DE); ZYDEK, Michael, 60529 Frankfurt (DE)
(86) Internationale Anmeldenummer: PCT/EP2001/002374
(87) Internationale Veröffentlichungsnummer: WO 2001/066395

(56) Entgegenhaltungen:
- DE-A- 19 525 217
- US-A- 4 105 900
- US-A- 5 207 483

## Beschreibung

Die Erfindung bezieht sich auf eine Anordnung und eine Vorrichtung zur Steigerung der Eigensicherheit von Anordnungen zur Erfassung von Gierwinkelbewegungen in Kraftfahrzeugsystemen mit geregelten Bremsen. Dies sind beispielsweise automatische Fahrstabilitätsregelungen (ESP) in Verbindung mit Antiblockiersystemen (ABS), Antriebsschlupfregelungen (ASR) und Lenkkorrekturen aber auch Systemen zur autonomen Abstandsregelung (AICC) oder zur Kollisionsvermeidung.

Fahrstabilitätsregelungen (ESP) zur Kontrolle und Begrenzung von unerwünschten Gierbewegungen um die Hochachse sind bekannt. Hierbei werden mit Hilfe von Sensoren wesentliche durch den Fahrer willentlich veränderbare Größen gemessen und daraus eine Soll-Gierrate errechnet. Es sind dies der Lenkwinkel, die Gaspedalstellung, der Bremsdruck, die Querbeschleunigung sowie das Drehverhalten der einzelnen Fahrzeugräder. Gleichzeitig wird der Istwert der Gierrate, der sich als Reaktion auf das Fahrmanöver einstellt mit einem Gierratensensor gemessen. Weicht der Istwert der Gierbewegung vom berechneten Sollwert über ein vorgegebenes, die Fahrstabilität gefährdendes Maß ab, wird durch gezielten Bremsen- und Motoreingriff die Gierbewegung auf zulässige Werte begrenzt.

Von den Sensoren ist eine hohe Funktionssicherheit zu verlangen, weil ihre Fehlfunktionen u.U. Bremsungen/ Entbremsungen zum falschen Zeitpunkt bewirken und damit gefährliche Situationen herbeiführen können. Dies gilt insbesondere für den Gierratensensor, bei dem bereits ein mäßiges Überschreiten der zulässigen Drift-Toleranzen für Genauigkeit und Präzision zu unerwünschten Anregelvorgängen führen kann. Obwohl die Auswirkung dieser Anregelvorgänge durch Nutzung anderer Hilfsgrößen, Kausalitäten bzw. Plausibilitätskriterien beherrscht wird, ist es gegenwärtig vorrangiges Bestreben der Automobilindustrie, die Eigensicherheit der Gierratensensorik so zu steigern, daß unerwünschte Anregelvorgänge, verursacht durch fehlerhafte Gierratensensoren auch ohne andere Hilfsgrößen, Kausalitäten bzw. Plausibilitätskriterien sicher ausgeschlossen werden. Kraftfahrzeug (Kfz)-Gierratensensoren nach dem gegenwärtigen Stand der Technik verfügen bereits über ein hohes Maß an Eigensicherheit und sind so konstruiert, daß die überwiegende Mehrzahl aller Fälle als definierter Totalausfall kenntlich wird. Es verbleibt jedoch eine geringe Wahrscheinlichkeit, daß mögliche langsam fortschreitende Defekte nicht erkannt werden. Solche Defekte sind beispielsweise die Folge von fehlerhaften Kondensatoren, offenen hochohmigen Halbleitereingängen, Wackelkontakten etc.. Die Wahrscheinlichkeit, daß ein Sensor ausfällt, kann für einen isolierten Sensor seitens des Herstellers angegeben werden. Diese sog. Eigensicherheit des Sensor erfüllt jedoch noch nicht die gestellten Anforderungen der Kraftfahrzeugindustrie.
Der Bedarf läßt sich gemäß nachfolgender Berechnung abschätzen: Die Abschätzung, daß pro Jahr 10 Millionen Fahrzeuge produziert und ausgeliefert werden und bei einer durchschnittlichen Betriebsdauer von 4500 Stunden pro Fahrzeug führt zu einer geforderten Ausfallwahrscheinlichkeit des Gierratensensors von etwa 10⁻⁷.
Herkömmliche Gierratensensoren für Kraftfahrzeuge erfüllen diese hohen Anforderungen an eine derart geringe Ausfallwahrscheinlichkeit derzeit nicht. Es besteht daher ein Bedarf, eine Einheit zur Gierratensensorik mit hoher Eigensicherheit zur Verfügung zu stellen.

Die Erfindung hat die Zielsetzung, eine Anordnung bzw. Vorrichtung aufzuzeigen, deren Anwendung den vorstehen geschilderten hohen Anforderungen genügt.

Diese Aufgabe wird gelöst durch eine Anordnung gemäß Anspruch 1.
Die erfindungsgemäße Anordnung zur Erfassung von sicherheitskritischen Meßgrößen, insbesondere Gierraten und/oder Beschleunigungsdaten in Kraftfahrzeugen, umfaßt mindestens zwei unabhängige Messkanäle mit voneinander unabhängigen Sensoren und Mittel zur Prüfung einer Fehlfunktion oder eines Ausfalls der Messkanäle.

In der Anordnung gemäß der Erfindung werden der erste Messkanal und der oder die weiteren Messkanäle in heißer Redundanz betrieben. Das bedeutet im Sinne der Erfindung, wie weiter unten noch näher beschrieben wird, daß gleichartige aber nicht genau gleiche Sensoren so eingesetzt werden, daß beide Sensoren parallel und uneingeschränkt, wobei darunter z.B. ein uneingeschränkter Meßbereich verstanden wird, in Betrieb sind.
Gleichartige Sensoren sind im Sinne der Erfindung z.B. solche, die nach dem gleichen physikalischen Prinzip arbeiten, wie etwa Vibrationssensoren mit unterschiedlichen Resonanzfrequenzen der Schwingungskörper oder Lasersensoren oder auch solche Sensoren aller physikalischer Typen, die der gleichen Genauigkeitsklasse angehören.
Gemäß der Erfindung sind die eingesetzten Sensoren nicht genau gleich. Sie unterscheiden sich, wie weiter unten näher erläutert wird, zumindest in ihren Schwingungsgrundmoden so deutlich, daß ein Übersprechen von einem Sensor zum anderen verhindert wird und äußere mechanische oder elektromagnetische Störungen sich nicht in gleicher Weise auf die Sensoren auswirken.

Unter dem Begriff "Genauigkeitsklasse" wird im Sinne der Erfindung verstanden, daß die Abweichungen der Messwerte von Sensoren in einer Genauigkeitsklasse innerhalb eines vorgegebenen Genauigkeitsintervalls (prozentuale Abweichung bezogen auf den in einem Meßbereich angezeigten Endwert) liegen.

Die in der vorliegenden Erfindung verwendeten unterschiedlichen Redundanzbegriffe sind in Gellert, Kästner, Dr. Neuber, Lexikon der Mathematik, II Zuverlässigkeitstheorie, Seite 470, Verlag VEB Bibliographisches Institut Leipzig, 1985 sowie in Helm, Dr. Prang, Lehrbuch der Automatisierungstechnik, Seite 88 bis 90, Zuverlässigkeitskenngrößen/Redundanz, Verlag VEB Technik Berlin, 1965 erläutert.
Man benutzt den Begriff Redundanz im Zusammenhang mit dem Einbau zusätzlicher Elemente (z.B. Messkanäle) zwecks Erhöhung der Zuverlässigkeit eines technischen Systems.
Man spricht von "kalter Redundanz", wenn die Reserveelemente (z.B. Reservekanäle bzw. Reservesensoren) im normalen Betrieb keinerlei Beanspruchung ausgesetzt sind, dagegen von "heißer Redundanz", wenn die Reserveelemente im normalen Betrieb den gleichen Beanspruchungen wie die Arbeitselemente unterworfen sind. Kalte und heiße Redundanz bilden die Grenzfälle der "warmen Redundanz", bei der die Reserveelemente geringer beansprucht werden als die Arbeitselemente.

Bei den erfindungsgemäß einsetzbaren Sensoren die die Anordnung umfaßt, handelt es sich um einen ersten Gierratensensor, mindestens einen weiteren Gierratensensor und ggf. weitere Sensoren wie Beschleunigungssensoren.

Die Anwendung von Redundanzüberlegungen im Bereich der Sensorik bei Kraftfahrzeugen ist zur Erhöhung der Zuverlässigkeit technischer Systeme an sich bekannt. So wird in der DE 195 25 217 A1 ein Verfahren und eine Anordnung vorgeschlagen, bei der Gierraten als Eingangsgröße eines Kraftfahrzeug-Regelungssystems mit Hilfe von zwei unabhängigen Meßkanälen gewonnen werden, von denen ein Meßkanal den gesamten Meßbereich erfaßt, während der andere Kanal auf einen Teil-Meßbereich eingestellt ist. Zur Fehlererkennung werden die Ausgangsgrößen der Meßkanäle auf Übereinstimmung der von den Meßkanälen erfaßten Meßgrößen und/oder auf Plausibilität der Meßergebnisse überprüft. Hierbei wird der Teil-Meßbereich in Abhängigkeit vom Giervorgang dynamisch verändert bzw. als "Lupe" verwendet. Im Gegensatz zum vorliegenden Erfindung (Anwendung der "heißen Redundanz"), nutzt das Verfahren nach der DE 195 25 217 A1 ein Prinzip, das der Anwendung einer "warmen Redundanz" entspricht. Das ist darin begründet, daß sich in der DE 195 25 217 A1 der Anteil der Nutzung der "heißen Redundanz" auf den Teil-Meßbereich beschränkt, wobei der Teil-Meßkanal mit höherer Präzision ausgestattet ist und daher meßtechnisch stärker genutzt ist als der zweite Meßkanal. Außerhalb des Teilmeßbereiches besteht "kalte Redundanz", weil der Teil-Meßkanal normalerweise ungenutzt bleibt, aber dynamisch latent verfügbar ist. Das erfindungsgemäß vorgeschlagene Verfahren unterscheidet sich vom in der DE 195 25 217 A1 beschriebenen Verfahren dadurch, dass die Resonanzfrequenzen der Gierratensensoren unterschiedlich sind.

In der DE 199 21 692 A wird eine Anordnung zum Schutz von elektronischen Funktionseinheiten und/oder Funktionsgruppen vor Störgrößen vorgeschlagen. Hierbei werden Baugruppen mit unterschiedlicher Empfindlichkeit gegenüber Störgrößen unterschiedliche Abschirmungen gegen die Störgrößen zugeordnet, wobei sich zwei oder mehrere Abschirmungen zu einer Abschirmung mit höherem Wirkungsgrad ergänzen.

In der erfindungsgemäßen Anordnung sind ganz allgemeinen Gierratensensoren eines beliebigen physikalischen Wirkungsprinzips, z.B. Sensoren, die auf der Anwendung von Laserlicht beruhen, verwendbar. Vorzugsweise handelt es sich bei den verwendeten Gierratensensoren jedoch um Typen, bei denen die unter der Gierbewegung auftretenden Corioliskräfte an Vibrationskörpern genutzt werden, um auf die Gierrate zurückzuschließen (mechanische Schwingungselemente). Derartige Gierratensensoren sind vielfältig bekannt. Als Vibrationskörper finden Zylinder, Ringe, Scheiben, Prismen, Stimmgabeln, mikromechanisch erzeugte Gebilde aus Silizium oder Quarz Anwendung. Das Wirkprinzip dieser Sensoren besteht darin, daß der Vibrationskörper oszillatorisch mit einer konstanten Antriebsamplitude und -frequenz in die eine Körperrichtung zu mechanischen Schwingungen angeregt wird, während unter dem Einfluß der Corioliskraft gleichzeitig in einer anderen Körperrichtung eine mechanische Schwingung entsteht, deren Amplitude der Gierrate proportional ist. Die Vibrationskörper werden über piezoelektrische oder magnetische Wandlerverfahren zu oszillatorischen Schwingungen angeregt (Drive) und die Coriolis-Reaktion über gleichartige piezoelektrische oder magnetische Wandlerverfahren (Pick-Up) abgetastet. Bezeichnet man die Drive-Frequenz des oszillatorischen Antriebes mit fₒ und die Pick-Up-Frequenz der mechanischen Schwingung in Raumrichtung der Coriolis-Reaktion mit f_{c} dann sind die Vibrationskörper mechanisch so ausgebildet, daß zwischen beiden Frequenzen stets ein Resonanzfrequenzabstand Δf = fₒ - f_{c} besteht.

Die Gierratensensoren mit mechanischen Schwingungselementen unterscheiden sich darin, daß die Resonanzfrequenzen der Schwingungselemente soweit voneinander entfernt sind, daß sich die Schwingungen nicht gegenseitig beeinflussen und von außen aufgeprägte Schwingungen beide Gierratensensoren nicht oder nur geringfügig anregen.

Die einzelnen Frequenzen fₒ und f_{c} aller redundanten Gierratensensoren zueinander werden dann so gewählt, daß bei gemeinsamer mechanischer Anordnung in einem Gehäuse oder auf einem gemeinsamen Träger keine störenden mechanischen Schwingungsverkopplungen der einzelnen sensorischen Vibrationskörper und/oder elektrische Verkopplungen (z.B. Mitzieheffekte oder durch mechanische Körperschall-Kopplung) der Oszillatoren oder der Pick-Up-Signale mehr auftreten.

Wie vorstehend bereits erwähnt, wird bei Anwendung der "heißen Redundanz" (im Unterschied zu anderen Redundanzformen) die Gesamtausfallrate (Unzuverlässigkeit) auf das Produkt der Einzelausfallraten reduziert. Wenn die Ausfallrate des einzelnen Kfz-Gierratensensors mit 70 FIT, was gleichbedeutend mit 70 x 10⁻⁹ Ausfällen pro Betriebsstunde ist, - ein praktisch relevanter Wert - gestaltet ist, dann wird mit zwei erfindungsgemäß gleichartigen Gierratensensoren in "heißer Redundanz" die geforderte Eigensicherheit mit einer Ausfallwahrscheinlichkeit von etwa 10⁻⁷ unter Maßgabe von 10 Millionen ausgerüsteten Fahrzeugen mit einer jeweiligen Lebens-Betriebsdauer von 4500 Stunden erreicht.

In der Anordnung ist vorzugsweise mit den Sensoren eine Sensorelektronik verbunden, deren Ausgangssignale von elektronischen Verarbeitungseinheiten ausgewertet werden und es ist weiterhin eine Verbindung zu einem Kommunikationsschnittstellenanschluß vorhanden, welcher mit mind. einer zentralen Steuerung verbunden werden kann.

In der elektronische Verarbeitungseinheit melden die Mittel zur Prüfung der Fehlfunktion das Ergebnis der Prüfung durch Weitergabe eines geeigneten Signals an den Kommunikationsschnittstellenanschluß weiter, so daß eine über die Kommunikationsschnittstelle angeschlossene zentrale Steuerung (ESP/ECU auf einen Sensorausfall ggf. in der Weise reagieren kann, daß zunächst der Betrieb der Anordnung so lange fortgesetzt wird, bis das Kraftfahrzeug sich in einem sicheren Zustand befindet. Erst dann kann das System ganz oder teilweise (Rückfallebenenkonzept) abgeschaltet werden.

Die Fehlererkennung wird vorzugsweise in der Weise durchgeführt, daß die Ausgangsgrößen der einzelnen Gierratensensoren sowie das Veränderungsverhalten dieser Ausgangsgrößen fortlaufend miteinander in einer Vergleichseinheit verglichen werden. Weichen die Ausgangsgrößen und/oder deren Veränderungsverhalten voneinander und/oder von vorgegebenen Zulässigkeitskriterien über einen temporär gültigen Grenzwert ab, so wird der Eintritt in eine Regelung, die sich auf die Gierratensensorik stützt, nicht zugelassen. Befindet sich das System mit (n) heißredundanten Kanälen in der Regelung und an (n-m) Kanälen tritt während der Regelung ein Totalausfall auf, so wird die Regelung mit den verbliebenen (m) Kanälen zu Ende geführt.

Besonders bevorzugt ist es vorgesehen, die Frequenzabstände der einzelnen redundanten Sensoren Δf wie folgt zu wählen: Für den Fall, daß zwei, in ihrem Meßbereich und ihrer Präzision vergleichbare, Gierratensensoren eingesetzt werden, sollte der erste Sensor die Frequenzen fₒ₁, f_{c1} mit dem Frequenzabstand Δf₁ und der zweite Sensor die Frequenzen fₒ₂, f_{c2} mit dem Frequenzabstand Δf ₂ besitzen, wobei dafür Sorge zu tragen ist, daß die Frequenzabstände so gewählt sind, daß keine Gleichkanalstörungen (Common-Mode-Störungen) mechanischer oder elektrischer Art auftreten, die zeitgleich beide Gierratensensoren beeinflussen könnten.
Werden die Frequenzabstände wie vorstehend beschrieben gewählt, führen überraschenderweise äußere Vibrationseinflüsse, die während der Fahrt durch das Chassis des Kraftfahrzeuges auf das gemeinsame Sensorgehäuse oder den gemeinsamen Träger einwirken, nicht zum Ausfall der erfindungsgemäßen Gieratensensoranordnung.

Die Gierratensensoren können in sogenannter "heißer Redundanz" als ein Funktionsblock (Modul) mit einem gemeinsamen umhüllenden Gehäuse angeordnet sein.
Die Erfindung betrifft daher auch eine Vorrichtung bestehend aus einem abgedichteten Gehäuse mit einem Stecker, wobei von dem abgedichteten Gehäuse die vorstehend beschriebene Anordnung umfaßt wird.

Die Sensoren sind bevorzugt in einem innerhalb des Gehäuses angeordneten abschirmendem Innengehäuse oder Käfig angeordnet.
Das Innengehäuse oder der Käfig steht zweckmäßigerweise nicht galvanisch mit dem abgedichteten Gehäuse in Verbindung.

Vorzugsweise sind die Gierratensensoren auf einer ersten Leiterplatte angeordnet und zumindest ein Teil der elektronischen Verarbeitungseinheiten ist auf einer weiteren Leiterplatte angeordnet.

Es ist zweckmäßig, wenn die erste Leiterplatte innerhalb des abschirmenden Innengehäuse oder Käfig angeordnet ist und die weitere Leiterplatte außerhalb des abschirmendem Innengehäuse oder Käfig angeordnet ist.

Die eingesetzten Abschirmmittel zum Schutz gegenüber eingestrahlter elektrischer Hochfrequenzenergie verhindern, daß zeitgleich beide oder mehrere in "heißer Redundanz" betriebene Gierratensensoren durch diese Hochfrequenzenergie störend beeinflußt werden. Ähnliche Abschirmmittel werden in der P 199 21 692.4 beschrieben. In der bekannten Vorrichtung werden einzelne Gierratensensoren von unterschiedlich wirksamen Abschirmkäfigen oder -gehäusen umhüllt, so daß Störgrößen, wie elektromagnetische Einstrahlungen, kapazitive Einkopplungen usw., in unterschiedlicher Weise auf die Gierratensensoren wirken.
Gemäß einer bevorzugten Ausführungsform der Erfindung werden die Gierratensensoren in einem innerhalb eines Außengehäuses angeordneten Innengehäuse oder -käfig untergebracht, so daß sich die Schirmwirkung des Außengehäuses und des Innengehäuses ergänzt.

Die erfindungsgemäße Vorrichtung stellt ganz besonders bevorzugt eine Kombination mit Quer- und Längs-Beschleunigungssensoren als kleines kompaktes Gerät mit CAN-Bus-Schnittstelle dar (Sensorcluster).

Zusätzliche Ausführungsbeispiele und bevorzugte Ausführungsformen der Erfindung gehen aus der folgenden Beschreibung eines Ausführungsbeispiels anhand der beigefügten Figuren hervor.

Es zeigen
- Fig.1: in schematischer Darstellung eine Anordnung der erfindungsgemäßen Art,
- Fig. 2A: in schematischer Darstellung das konstruktive Konzept einer praktischen Ausführungsform,
- Fig. 2B: die maßstabsgerechte Ansicht einer praktischen Ausführungsform nach Fig. 1 und Fig. 2A,
- Fig. 2C: die Koordinatenausrichtung der Ausführungsform nach Fig. 2A und Fig. 2B zum Fahrzeug.

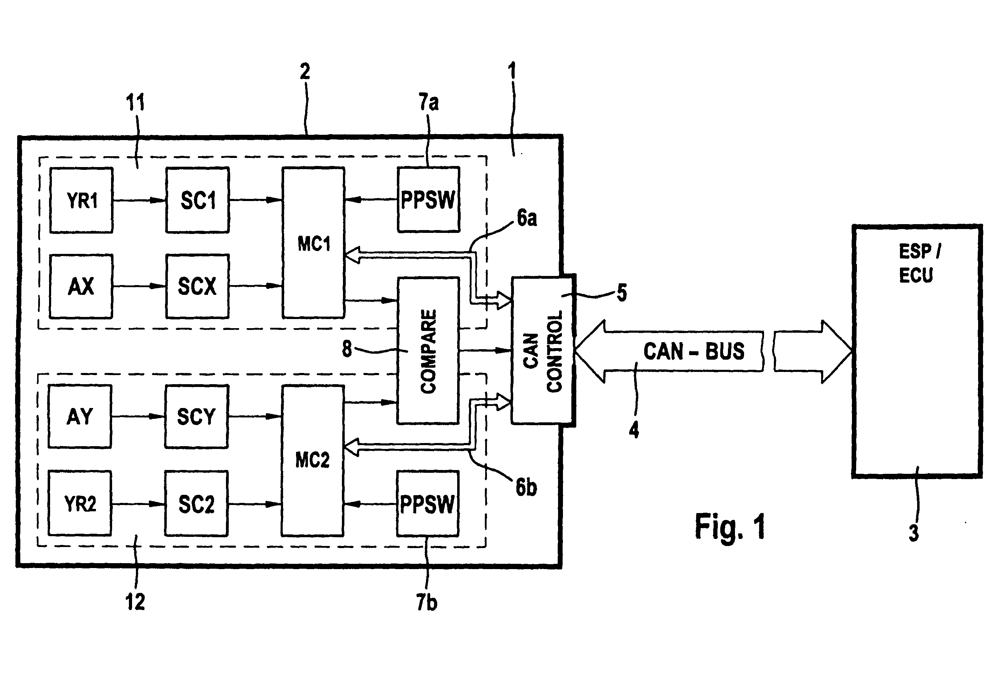

In Fig.1 ist in schematischer Darstellung das gerätetechnische Zusammenwirken der Komponenten einer Anordnung der erfindungsgemäßen Art dargestellt. Die Anordnung bildet ein Gerät 1 zur gleichzeitigen Erfassung von Gierrate, Längsbeschleunigung und Querbeschleunigung für ESP-Anwendungen. Das Gerät hat ein Gehäuse 2, in dessen Innenraum alle Komponenten untergebracht sind. Zwischen dem Gerät und dem elektronischen Regler der ESP-Anlage 3 besteht eine CAN-Bus-Verbindung 4. Der CAN-Bus-Controller 5 ist Bestandteil des Gerätes. Die Anordnung besitzt strukturell zwei unabhängige Messkanäle 11,12. Diese Messkanäle sind im wesentlichen gleichartige sensorische Stränge. Der erste Messkanal 11 besteht aus dem Gierratensensor YR1 mit zugehöriger Signalaufbereitungsschaltung SC1 sowie dem Längsbeschleunigungssensor AX mit zugehöriger Signalaufbereitungs-schaltung SCX. Die Signale dieser Sensoren werden in einem ersten Mikrocontroller MC1 signaltechnisch vorverarbeitet. Hierzu existiert eine residente Software PPSW 7a und es besteht die Möglichkeit, Zusatzinformation über die Verbindung 6a von der ECU über den CAN-Bus zu empfangen. Der zweite Messkanal 12 besteht aus dem Gierratensensor YR2 mit Signalaufbereitungsschaltung SC2 sowie dem Querbeschleunigungssensor AY mit Signalaufbereitungsschaltung SCY. Die Signale dieser Sensoren werden in einem zweiten Mikrocontroller MC2 signaltechnisch vorverarbeitet. Hierzu existiert eine residente Software PPSW 7b und es besteht die Möglichkeit, Zusatzinformation über die Verbindung 6b von der ECU über den CAN-Bus zu empfangen. Die vorverarbeiteten Signale werden in einer Funktionsstufe 8 zusammengeführt. Hier werden die beschriebenen Redundanzüberprüfungen durchgeführt und entsprechende Statussignale generiert, die der ECU signalisieren, ob ein Eintritt in die Regelung temporär zulässig ist oder ob während der Regelung einer der Kanäle einen Totalausfall erlitten hat. Über den CAN-Bus werden an die ECU zyklisch die vorverarbeiteten Signale YR1, YR2, AX, AY sowie die Statussignale der Redundanzüberprüfung übertragen, so daß die Möglichkeit besteht, in der ECU eine zweite unabhängige Redundanzüberprüfung vorzunehmen.

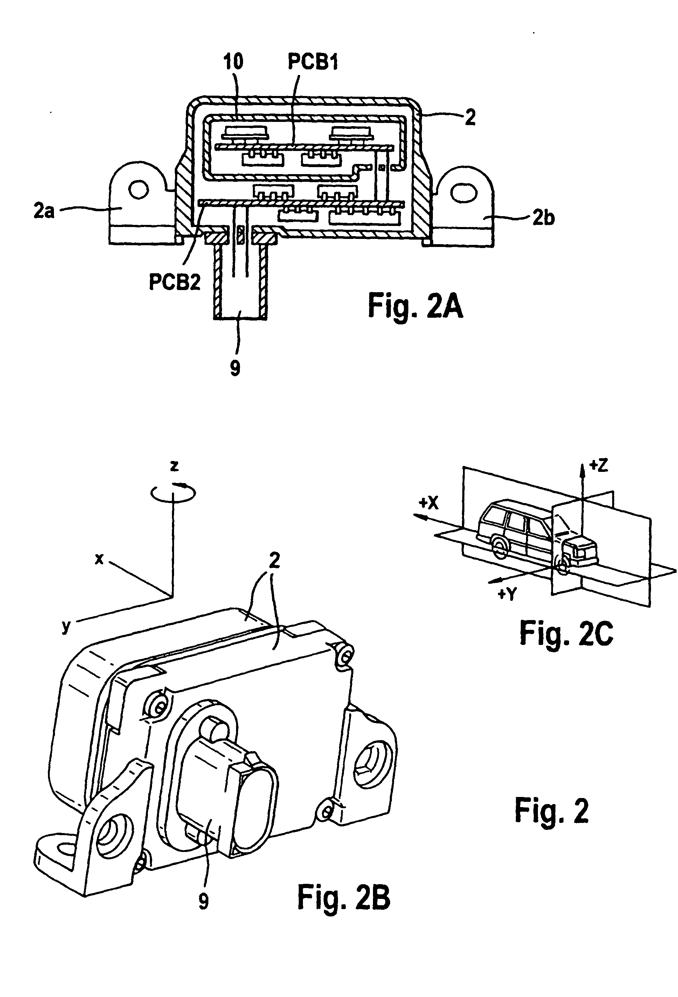

Fig. 2A zeigt das konstruktive Konzept des Gerätes 1 in schematischer Darstellung. Das verwindungssteife Gehäuse 2 ist aus Aluminium gefertigt. Es besitzt zwei Laschen 2a, 2b zur Befestigung am Chassis und einen CAN-Bus-Stecker 9. Im Inneren befinden sich zwei Platinen PCB1 und PCB2. Auf PCB1 sind YR1 und SC1 sowie YR2 und SC1 angeordnet. PCB1 ist von einem metallischen Abschirmkäfig (Faraday-Käfig) 10 umschlossen, der das Eindringen von leistungsstarker Hochfrequenzstrahlung (z.B. von einem Mobilfunktelefon) in die empfindliche Gierratensensorik verhindert. Auf PCB2 sind alle restlichen Komponenten untergebracht, die zu Fig. 1 beschrieben wurden.

Die Technik der bevorzugt eingesetzten Gierratensensoren basiert auf mikromechanischen Stimmgabeln aus Quarz oder mikromechanisch erzeugten Gebilden aus Silizium, die durch den bei einer Drehung auftretenden Coriolis-Effekt ausnutzt. Im Sinne der Erfindung bilden beide Beschleunigungssensoren mit ihren Signalaufbereitungsstufen zusammen nach Art eines MEMS (Micro-Electronic-Mechanical-System) eine komplexe Einheit. Es ist ebenso im Sinne der Erfindung, daß je ein Gierratensensor und ein Beschleunigungssensor mit ihren spezifischen Signalaufbereitungsstufen nach Art eines MEMS eine komplexe Einheit bilden.

Zur Anwendung beispielsweise in ESP-Systemen werden bevorzugt Gierratensensoren mit einem Meßbereich von +/- 75°/s bis +/- 100°/s eingesetzt.

Die Ausfallrate der eingesetzten Gierratensensoren liegt bevorzugt bei höchstens etwa 70 FIT.

Werden zwei erfindungsgemäß gleichartige Gierratensensoren, was bevorzugt ist, eingesetzt, so können die mechanische Eigenfrequenzen der Schwingungselemente beispielsweise wie folgt gewählt werden:

| | | | |
|---|---|---|---|
| Sensor 1: | fₒ₁ = 12,0 kHz, | f_{c1} = 12,2 kHz, | Δf₁ = 200 Hz |
| Sensor 2: | fₒ₂ = 12,5 kHz, | f_{c2} = 12,6 kHz, | Δf₂ = 100 Hz |

Als Beschleunigungssensoren werden bevorzugt Elemente eingesetzt, die einen Meßbereich von etwa +/- 1,5 g bis etwa +/- 2,0 g besitzen, wobei g die Erdbeschleunigung ist.

Die eingesetzten Beschleunigungssensoren und Gierratensensoren weisen bezüglich Signalauflösung und Rauschverhalten, bezogen auf eine Bandbreite von 50 Hz, vorzugsweise eine Signalquantisierung von minimal etwa 10 Bit auf.

## Patentansprüche

1. Anordnung zur Erfassung von sicherheitskritischen Meßgrößen, insbesondere Gierraten und/oder Beschleunigungsdaten in Kraftfahrzeugen, umfassend mindestens zwei unabhängige Messkanäle (11, 12) mit voneinander unabhängigen Sensoren (YR1, YR2, AX, AY) und Mittel zur Prüfung einer Fehlfunktion oder eines Ausfalls der Messkanäle (5,8), wobei der erste Messkanal (11) und der oder die weiteren Messkanäle (12) in heißer Redundanz betrieben werden, indem gleichartige aber nicht genau gleiche Sensoren so eingesetzt werden, daß die Sensoren parallel und uneingeschränkt in Betrieb sind, und wobei die Sensoren einen ersten Gierratensensor (YR1), mindestens einen weiteren Gierratensensor (YR2) und ggf. weitere Sensoren wie Beschleunigungssensoren (AX, AY) umfassen, **dadurch gekennzeichnet, daß** die Gierratensensoren mechanische Schwingungselemente aufweisen und sich die Gierratensensoren darin unterscheiden, daß die Resonanzfrequenzen der Schwingungselemente soweit voneinander entfernt sind, daß sich die Schwingungen nicht gegenseitig beeinflussen und von außen aufgeprägte Schwingungen beide Gierratensensoren nicht oder nur geringfügig anregen.

2. Anordnung nach Anspruch 1, **dadurch gekennzeichnet, daß** mit den Sensoren eine Sensorelektronik (SC1, SCX, SCY, SC2) verbunden ist, deren Ausgangssignale von elektronischen Verarbeitungseinheiten (MC1, MC2, COMPARE) ausgewertet werden und eine Verbindung zu einem Kommunikationsschnittstellenanschluß (CAN CONTROL) vorhanden ist, welcher mit mind. einer zentralen Steuerung (ESP/ECU) verbunden werden kann.

3. Anordnung nach Anspruch 1 oder 2, **dadurch gekennzeichnet, daß** die elektronische Verarbeitungseinheit eine Vergleichseinheit (COMPARE) aufweist, die die Sensorsignale mehrerer Gierratensensoren und die zeitliche Änderung der Signale miteinander vergleicht.

4. Vorrichtung bestehend aus einem abgedichteten Gehäuse (2) mit einem Stecker (9), wobei von dem abgedichteten Gehäuse die Anordnung gemäß mindestens einem der Ansprüche 1 bis 3 umfaßt wird.

5. Vorrichtung nach Anspruch 4, **dadurch gekennzeichnet, daß** die Sensoren in einem innerhalb des Gehäuses (2) angeordneten abschirmendem Innengehäuse oder Käfig (10) angeordnet sind.

6. Vorrichtung nach Anspruch 5, **dadurch gekennzeichnet, daß** das Innengehäuse oder der Käfig nicht galvanisch mit dem abgedichteten Gehäuse in Verbindung steht.

7. Vorrichtung nach mindestens einem der Ansprüche 4 bis 6, **dadurch gekennzeichnet, daß** die Gierratensensoren auf einer ersten Leiterplatte angeordnet sind und zumindest ein Teil der elektronischen Verarbeitungseinheiten (MC1, MC2, COMPARE) auf einer weiteren Leiterplatte angeordnet ist.

8. Vorrichtung nach Anspruch 7, **dadurch gekennzeichnet, daß** die ersten Leiterplatte innerhalb des abschirmendem Innengehäuse oder Käfig angeordnet ist und die weitere Leiterplatte außerhalb des abschirmendem Innengehäuse oder Käfig angeordnet ist.

9. Vorrichtung nach mindestens einem der Ansprüche 4 bis 8, **dadurch gekennzeichnet, daß** die im Stecker (9) vorhandenen Steckerpins kabellos mit einer Leiterplatte verbunden sind.

10. Vorrichtung nach mindestens einem der Ansprüche 4 bis 9, **dadurch gekennzeichnet, daß** das abgedichtete Gehäuse Halterungselemente (2a), vorzugsweise für unterschiedliche Einbauorientierungen, zum Einbau in ein Kraftfahrzeug aufweist.

## Claims

1. System for detecting safety-critical measured quantities, in particular yaw rates and/or acceleration data in automotive vehicles, comprising at least two independent measuring channels (11, 12) with sensors (YR1, YR2, AX, AY) that are independent of one another and elements for verifying a malfunction or a failure of the measuring channels (5, 8), wherein the first measuring channel (11) and the additional measuring channel(s) (12) are operated in hot redundancy employing sensors of similar type but not exactly identical in such a manner that the sensors are operated in parallel and without restriction, and wherein the sensors comprise a first yaw rate sensor (YR1), at least one additional yaw rate sensor (YR2) and, optionally, other sensors such as acceleration sensors (AX, AY),
**characterized in that** the yaw rate sensors include mechanical vibration elements, and the yaw rate sensors differ from each other **in that** the resonance frequencies of the vibration elements are so far remote from one another that the vibrations do not mutually influence each other and externally induced vibrations do not at all or only slightly excite the two yaw rate sensors.

2. System as claimed in claim 1,
**characterized in that** connected to the sensors is a sensor electronics (SC1, SCX, SCY, SC2) having output signals that are evaluated by electronic processing units (MC1, MC2, COMPARE), and **in that** there is a connection to a communication serial interface adapter (CAN CONTROL) which can be connected to at least one central control (ESP/ECU).

3. System as claimed in claim 1 or 2,
**characterized in that** the electronic processing unit includes a comparison unit (COMPARE) which compares the sensor signals of several yaw rate sensors and the time variation of the signals with one another.

4. Device comprising a sealed housing (2) with a plug (9), the sealed housing encompassing the system according to at least any one of claims 1 to 3.

5. Device as claimed in claim 4,
**characterized in that** the sensors are arranged in a shielding internal housing or cage (10) arranged within the housing (2).

6. Device as claimed in claim 5,
**characterized in that** the internal housing or the cage is not physically connected to the sealed housing.

7. Device as claimed in at least any one of claims 4 to 6,
**characterized in that** the yaw rate sensors are arranged on a first printed circuit board, and at least part of the electronic processing units (MC1, MC2, COMPARE) are arranged on an additional printed circuit board.

8. Device as claimed in claim 7,
**characterized in that** the first printed circuit board is arranged inside the shielding internal housing or cage, and the additional printed circuit board is arranged outside the shielding internal housing or cage.

9. Device as claimed in at least any one of claims 4 to 8,
**characterized in that** the plug pins provided in the plug (9) are connected to a printed circuit board without cables.

10. Device as claimed in at least any one of claims 4 to 9,
**characterized in that** the sealed housing includes mounting elements (2a), preferably for different installation orientations, for the installation into an automotive vehicle.

## Revendications

1. Agencement pour détecter des grandeurs critiques sur le plan de la sécurité, en particulier des vitesses d'embardée et/ou des données relatives à l'accélération de véhicules automobiles, comportant au moins deux canaux de mesure (11, 12) indépendants avec des capteurs (YR1, YR2, AX, AY) indépendants les uns des autres et des moyens pour contrôler une fonction défectueuse ou une défaillance des canaux de mesure (5, 8), le premier canal de mesure (11) et le ou les autres canaux de mesure (12) étant mis en oeuvre en redondance très chaude par le fait que l'on a recours à des capteurs de type similaire mais pas exactement identiques de façon que les capteurs fonctionnent en parallèle et de manière non limitée, et les capteurs comportant un premier capteur d'embardée (YR1), au moins un autre capteur d'embardée (YR2) et éventuellement d'autres capteurs tels que des capteurs d'accélération (AX, AY), **caractérisé en ce que** les capteurs d'embardée comportent des éléments oscillants mécaniques et les capteurs d'embardée diffèrent **en ce que** les fréquences de résonance des éléments oscillants sont suffisamment éloignées les unes des autres pour que les oscillations ne s'influencent pas réciproquement et pour que des oscillations imprimées de l'extérieur n'agissent pas sur les deux capteurs d'embardée ou seulement légèrement.

2. Agencement selon la revendication 1, **caractérisé en ce qu'**aux capteurs est reliée une électronique de détection (SC1, SCX, SCY, SC2) dont les signaux de sortie sont exploités par des unités électroniques de traitement (MC1, MC2, COMPARE) et **en ce qu'**il existe une liaison avec un raccordement d'interface de communication (CAN CONTROL) qui peut être reliée à au moins une commande centrale (ESP/ECU).

3. Agencement selon la revendication 1 ou 2, **caractérisé en ce que** l'unité électronique de traitement comporte une unité de comparaison (COMPARE) qui compare entre eux les signaux de plusieurs capteurs d'embardée et la variation dans le temps des signaux.

4. Dispositif constitué d'un boîtier (2) rendu étanche avec un connecteur (9), le boîtier rendu étanche enfermant l'agencement selon l'une au moins des revendications 1 à 3.

5. Dispositif selon la revendication 4, **caractérisé en ce que** les capteurs sont disposés dans un boîtier intérieur ou cage (10) formant blindage, disposé à l'intérieur du boîtier (2).

6. Dispositif selon la revendication 5, **caractérisé en ce que** le boîtier intérieur ou la cage n'est pas en liaison galvanique avec le boîtier rendu étanche.

7. Dispositif selon l'une au moins des revendications 4 à 6, **caractérisé en ce que** les capteurs d'embardée sont disposés sur une première plaque à circuits imprimés et au moins une partie des unités électroniques de traitement (MC1, MC2, COMPARE) est disposée sur une autre plaque à circuits imprimés.

8. Dispositif selon la revendication 7, **caractérisé en ce que** la première plaque à circuits imprimés est disposée à l'intérieur du boîtier intérieur formant blindage et l'autre plaque à circuits imprimés est disposée à l'extérieur du boîtier intérieur formant blindage ou cage.

9. Dispositif selon l'une au moins des revendications 4 à 8, **caractérisé en ce que** les broches de connecteur prévues dans le connecteur (9) sont reliées sans câble à une plaque à circuits imprimés.

10. Dispositif selon l'une au moins des revendications 4 à 9, **caractérisé en ce que** le boîtier rendu étanche comporte des éléments de fixation (2a), de préférence pour différentes orientations de montage, pour le montage dans un véhicule automobile.
